# EUROPEAN PATENT APPLICATION

(11) **EP 4 400 693 A1**
(43) Date of publication of application: **17.07.2024**
(21) Application number: 24150782.1
(22) Date of filing: 08.01.2024
(51) Int. Cl.: F01D 5/02, G01M 1/24, G01M 1/14

(54) **COMPUTATIONALLY BALANCING A ROTATING STRUCTURE**

(30) Priority: 06.01.2023 US 202318094189
(71) Applicant: PRATT & WHITNEY CANADA CORP., Longueuil, Québec J4G 1A1 (CA)
(72) Inventor: TOUSIGNANT, Danick, (01BE5) Longueuil, J4G 1A1 (CA); BEAMISH, David, (01BE5) Longueuil, J4G 1A1 (CA); COURTOIS, Maxime, (01BE5) Longueuil, J4G 1A1 (CA)
(74) Representative: Dehns

(57) **Abstract**

A method provided for manufacturing includes providing a rotating structure (20) rotatable about an axis (24), the rotating structure (20) comprising a shaft (22); measuring a plurality of physical parameters of the shaft (22); computationally modeling the rotating structure (20) using the physical parameters to determine a correction to balance rotation of the rotating structure (20) about the axis (24); and physically altering the rotating structure (20) according to the correction.

## Description

### TECHNICAL FIELD

This invention relates generally to a rotating structure and, more particularly, to rotationally balancing a rotating structure.

### BACKGROUND INFORMATION

A gas turbine engine may include multiple rotating structures. Each rotating structure may include a shaft. Manufacturing defects and/or tolerances may cause a rotating structure shaft to be unbalanced. Prior to installation of the rotating structure shaft within the gas turbine engine, the rotating structure shaft may be rotationally balanced. Various methods and systems are known in the art for rotationally balancing a rotating structure shaft. While these known methods and system have various benefits, there is still room in the art for improvement.

### SUMMARY

According to an aspect of the invention, a method is provided for manufacturing. This method includes: providing a rotating structure rotatable about an axis, the rotating structure comprising a shaft; measuring a plurality of physical parameters of the shaft; computationally modeling the rotating structure using the physical parameters to determine a correction to balance rotation of the rotating structure about the axis; and physically altering the rotating structure according to the correction.

According to another aspect of the invention, another method is provided for manufacturing. This method includes: providing a rotating structure rotatable about an axis, the rotating structure comprising a shaft; measuring a minimum wall thickness measurement of the shaft at one or more locations axially along the shaft to provide minimum wall thickness data; measuring a maximum wall thickness measurement of the shaft at one or more locations axially along the shaft to provide maximum wall thickness data; measuring a runout measurement of the shaft at one or more locations axially along the shaft to provide runout data; and processing the minimum wall thickness data, the maximum wall thickness data and the runout data to determine a correction to balance rotation of the rotating structure about the axis.

According to still another aspect of the invention, another method is provided for manufacturing. This method includes: providing a rotating structure rotatable about an axis, the rotating structure comprising a shaft and a component mounted to the shaft; measuring a plurality of physical parameters of the rotating structure; and modeling the rotating structure using the physical parameters to determine a correction to balance rotation of the rotating structure about the axis.

The following optional features may be applied individually, or in any combination, to any of the above aspects of the invention.

The method may also include physically altering the rotating structure according to the correction to provide a balanced rotating structure.

The method may also include modifying the rotating structure according to the correction to provide a balanced rotating structure.

One of the physical parameters may be a first runout measurement of the shaft at a first axial location along the shaft.

Another one of the physical parameters may be a second runout measurement of the shaft at a second axial location along the shaft.

One of the physical parameters may be a first wall thickness measurement of the shaft at a first axial location along the shaft.

The first wall thickness measurement may be a minimum wall thickness measurement of the shaft at the first axial location along the shaft. Another one of the physical parameters may be a maximum wall thickness measurement of the shaft at the first axial location along the shaft.

Another one of the physical parameters may be a second wall thickness measurement of the shaft at a second axial location along the shaft.

The computationally modeling of the rotating structure may include modeling a dynamic rotational response of the rotating structure using the physical parameters to determine the correction.

The rotating structure may be configured for an aircraft drive unit. The dynamic rotational response of the rotating structure may be modeled at an operating speed of the rotating structure during one or more modes of operation of the aircraft drive unit.

The physically altering of the rotating structure may include removing material from the rotating structure.

The physically altering of the rotating structure may include adding material to the rotating structure.

The physically altering of the rotating structure may include: providing a balancing mass; and inserting the balancing mass into a bore of the shaft and attaching the balancing mass to the shaft.

The rotating structure may only include the shaft.

The rotating structure may also include a bladed rotor.

The rotating structure may also include a component mounted to the shaft.

The rotating structure may be configured for a motor or an engine of an aircraft.

The method may also include assembling a balanced rotating structure into an aircraft drive unit. The physically altering of the rotating structure may provide the balanced rotating structure.

The invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a flow diagram of a method for manufacturing a rotating structure.
FIG. 2 is a schematic cross sectional illustration of a rotating structure.
FIG. 3 is a partial schematic cross sectional illustration of another rotating structure.
FIG. 4 is a schematic illustration depicting wall thickness variation in a shaft.
FIG. 5 is a schematic illustration depicting shaft runout.
FIG. 6 is a schematic illustration depicting a bow in a shaft.
FIGS. 7A and 7B are schematic cross sectional illustrations depicting an exemplary sequence for balancing a rotating structure.
FIG. 8 is a schematic illustration of a balanced rotating structure assembled in an aircraft drive unit.
FIG. 9 is a schematic cross sectional illustration of a gas turbine engine.

### DETAILED DESCRIPTION

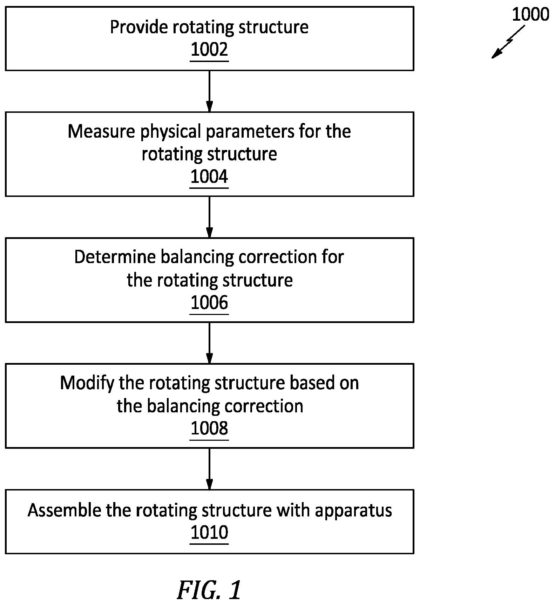

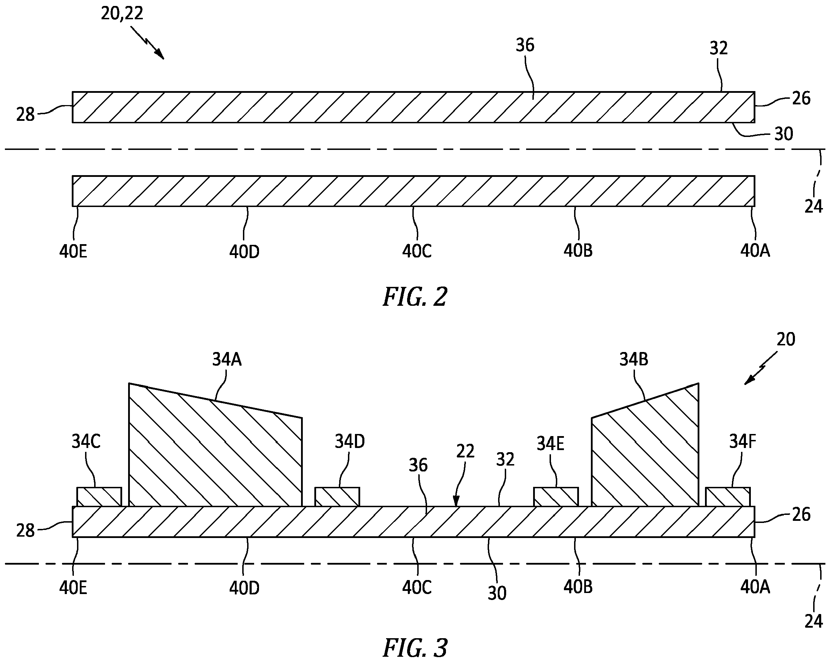

FIG. 1 is a flow diagram of a method 1000 for manufacturing a rotating structure 20 (e.g., see FIGS. 2 and 3) for an apparatus such as, but not limited to, an aircraft drive unit. The term "manufacturing" herein may describe a method for forming the rotating structure 20; e.g., creating a brand new rotating structure. The term "manufacturing" may also or alternatively describe a method for repairing the rotating structure 20; e.g., restoring one or more features of a previously formed rotating structure to brand new condition, similar to brand new condition or better than brand new condition. The rotating structure 20, for example, may be repaired to fix one or more defects (e.g., cracks, wear and/or other damage) imparted during previous use of the rotating structure 20. The rotating structure 20 may also or alternatively be repaired to fix one or more defects imparted during the initial formation of the rotating structure 20. However, for ease of description, the manufacturing method 1000 may be described below with respect to the initial forming of the rotating structure 20.

The aircraft drive unit may be configured as a thermal engine, a hybrid engine, an electric motor or any other device capable of driving rotation of a mechanical load. This mechanical load may be or include a ducted or unducted bladed rotor and/or a generator rotor. Examples of the bladed rotor include, but are not limited to, a fan rotor, a propeller rotor, a compressor rotor and a helicopter (e.g., main) rotor. Examples of the thermal engine include, but are not limited to, a gas turbine engine, a reciprocating internal combustion piston engine and a rotary internal combustion engine.

The rotating structure 20 may be configured as any component or assemblage of components within and/or coupled to the apparatus; e.g., the aircraft drive unit. The rotating structure 20 of FIG. 2, for example, is configured as a shaft 22; e.g., a driveshaft, a coupling shaft, an input shaft, an output shaft, etc. This shaft 22 extends axially along a rotational axis 24 of the rotating structure 20 and its shaft 22 between and to a first end 26 of the shaft 22 and a second end 28 of the shaft 22. Here, the shaft first end 26 is also a first end of the rotating structure 20, and the shaft second end 28 is also a second end of the rotating structure 20. The shaft 22 extends radially from an inner side 30 of the shaft 22 to an outer side 32 of the shaft 22. Here, the shaft inner side 30 is also an inner side of the rotating structure 20, and the shaft outer side 32 is also an outer side of the rotating structure 20. The shaft 22 extends circumferentially about (e.g., completely around) the rotational axis 24, which provides the shaft 22 with a tubular full-hoop body. While the rotating structure 20 of FIG. 2 (e.g., only) includes the shaft 22, the present disclosure is not limited to such an exemplary rotating structure configuration. The rotating structure 20 of FIG. 3, for example, also includes one or more other components 34A-F (generally referred to as "34") (schematically shown) mounted on and/or otherwise (e.g., directly or indirectly) rotatably coupled with the shaft 22. Examples of these other components 34 include, but are not limited to, a bladed rotor (e.g., a propulsor rotor, a compressor rotor, a turbine rotor, etc.), a spacer, a bearing race, a seal element, a seal land, a gear of a geartrain, another shaft, etc.

In step 1002, the rotating structure 20 is provided. For ease of description, the manufacturing method 1000 may be described below with respect to the rotating structure 20 of FIG. 2. However, this manufacturing method 1000 may alternatively be performed for the rotating structure 20 of FIG. 3 or any other rotating structure for the aircraft drive unit or any other apparatus with a rotating structure.

In step 1004, one or more physical parameters of the rotating structure 20 are measured or otherwise determined. The term "physical parameter" herein may describe a measured value of a geometric feature of the rotating structure 20.

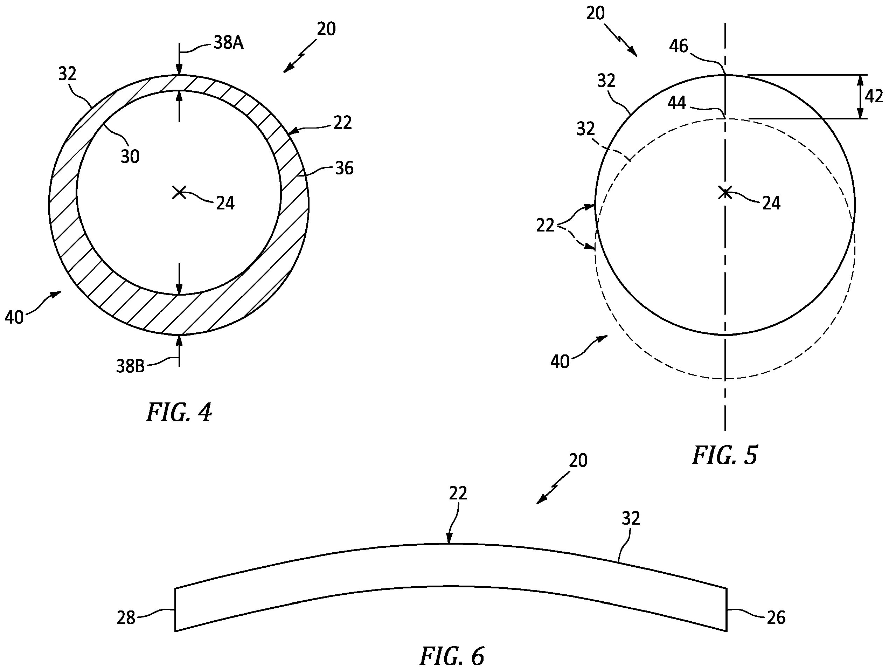

Referring to FIG. 4, the physical parameters may include one or more measurements of a thickness of a wall 36 (e.g., a tubular sidewall) of the shaft 22. These wall thickness measurements may include a minimum wall thickness 38A of the shaft 22 and/or a maximum wall thickness 38B of the shaft 22. Each of the wall thicknesses 38A, 38B (generally referred to as "38") is a measure of a distance from the shaft inner side 30 to the shaft outer side 32. This wall thickness 38 may be measured in a radial direction and/or perpendicular to one or more of the shaft sides 30, 32 and/or perpendicular to the rotational axis 24. In FIG. 4, the wall thicknesses 38 are measured at a common (the same) axial location 40 along the shaft 22. However, referring to FIG. 2 (see also FIG. 3), one or more of these wall thicknesses 38 may also be measured or otherwise determined at one or more additional locations (e.g., 40A-E; generally referred to as "40") along an axial length of the shaft 22. Typically, the greater the number of the axial locations 40 for which the wall thickness(es) 38 are determined, the greater the accuracy of a rotating structure balancing described below.

Referring to FIG. 5, the physical parameters may also or alternatively include a measurement of a runout of the shaft 22. The term "shaft runout" herein may describe a rotational eccentricity of the shaft 22 from the rotational axis 24. The shaft runout may be measured as a difference 42 (e.g., a dimensional distance) between a low point 44 on the shaft outer side 32 and a high point 46 on the shaft outer side 32 during rotation of the rotating structure 20. The shaft runout may be affected by shaft concentricity and/or shaft ovality, one or both of which may be measured to determine the shaft runout. The shaft runout may be caused by bowing of the shaft 22; e.g., see FIG. 6. Referring to FIG. 2 (see also FIG. 3), the shaft runout may be measured or otherwise determined at one or more locations (e.g., 40A-E) along the axial length of the shaft 22. Typically, the greater the number of the axial locations 40 for which the shaft runout is determined, the greater the accuracy of the rotating structure balancing described below.

The physical parameters may be measured or otherwise determined using various techniques. One or more or all of the physical parameters, for example, may be (e.g., directly) measured using manual measurement tools such as, but not limited to, calipers, a runout gauge, etc. One or more or all of the physical parameters may also or alternatively be (e.g., directly) measured using electronic measurement tools such as, but not limited to, 3D metrology, an ultrasonic measurement system, a computed tomography (CT) measurement system, a structured light (e.g., white light) measurement system, an x-ray measurement system, etc. One or more or all of the physical parameters may also or alternatively be (e.g., indirectly) measured by first measuring one or more other parameters and then processing those parameter(s) to determine the physical parameters of interest. The present disclosure, however, is not limited to the foregoing exemplary measurement techniques.

In step 1006, the rotating structure 20 is modeled to determine a balancing correction. The rotating structure 20, for example, may be computationally modeled (e.g., modeled using a computer system) using the physical parameters measured during the step 1004. The rotating structure 20 may also be computationally modeled using (e.g., known or predetermined) data from a design specification for the rotating structure 20; e.g., a design specification for the shaft 22. The physical parameters and the specification data may be processed to determine if the rotating structure 20 and its shaft 22 are rotationally unbalanced. And, if the rotating structure 20 and its shaft 22 are rotationally unbalanced, the physical parameters and the specification data may be processed to determine the balancing correction for the rotating structure 20 and its shaft 22. This balancing correction is indicative of an alteration which can be made to the rotating structure 20 and its shaft 22 to rotationally balance the rotating structure 20 and its shaft 22 about the rotational axis 24; e.g., locate a center of gravity of the rotating structure 20 and its shaft 22 on the rotational axis 24. The balancing correction, for example, may be indicative of how much mass to add to the rotating structure 20 and its shaft 22, and how to orient (e.g., circumferentially clock) that mass with the rotating structure 20 and its shaft 22. The balancing correction may alternatively be indicative of how much mass to remove from the rotating structure 20 and its shaft 22, and where to remove the mass with respective to the rotating structure 20 and its shaft 22.

The modeling of the rotating structure 20 and its shaft 22 may be analytically performed for one or more rotational speeds about the rotational axis 24. One or more of these rotational speeds may correspond to a rotational speed that the rotating structure 20 and its shaft 22 will rotate at during a mode of apparatus (e.g., aircraft drive unit) operation. Examples of these modes include, but are not limited to, full power (e.g., power for aircraft takeoff), intermediate power (e.g., power for aircraft cruise) and low power (e.g., power for aircraft landing). By modeling the rotating structure 20 and its shaft 22 at such exemplary rotational speed(s), the modeling may take into consideration dynamic rotational response(s) of the rotating structure 20 and its shaft 22; e.g., vibrations, natural frequency, etc. Of course, in other embodiments, one or more of the rotational speeds may correspond to a rotational speed below the rotating structure operating speed.

Where the dynamic rotational responses are modeled for multiple rotational speeds, the balancing correction may be provided to improve balancing for each of the rotational speeds. The balancing correction, for example, may provide a balance (e.g., middle ground) between balancing for a first rotational speed and balancing for a second rotational speed.

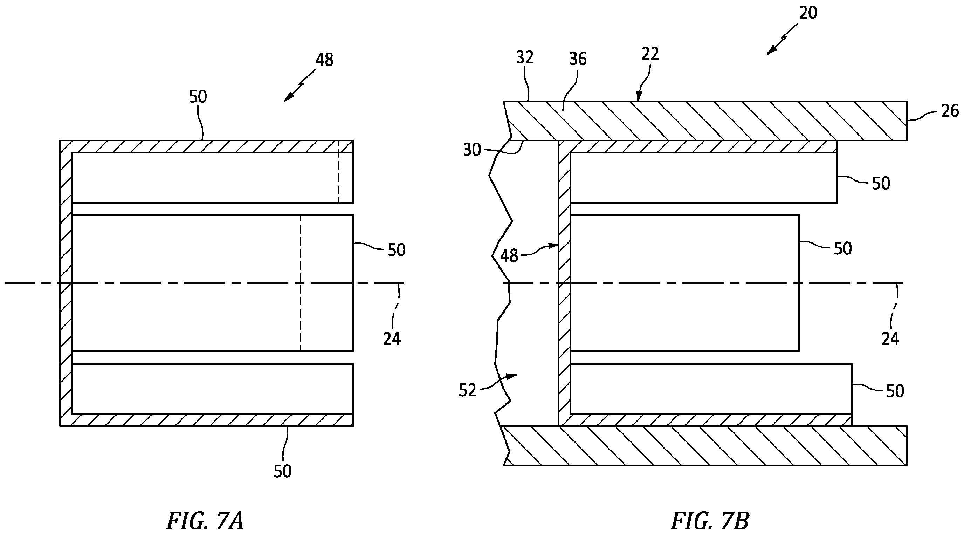

In step 1008, the rotating structure 20 is modified based on the determined balancing correction. For example, material (mass) may be added to and/or removed from the rotating structure 20 and its shaft 22 according to the balancing correction determined during the step 1006 to rotationally balance the rotating structure 20. For example, referring to FIG. 7A, a balancing mass 48 (e.g., a balancing cup) may be modified according to the balancing correction. For example, some or all material from one or more select features 50 (e.g., tabs, arms, spokes, etc.) on the balancing mass 48 may be removed (see dashed lines). Referring to FIG. 7B, this modified balancing mass 48 may then be mounted with the rotating structure 20 and its shaft 22. The modified balancing mass 48, for example, may be inserted into an inner bore 52 of the shaft 22 and attached (e.g., via a compression fit, bonding, a mechanical connection, etc.) to the shaft wall 36. The present disclosure, however, is not limited to the foregoing exemplary balancing mass.

By balancing the rotating structure 20 and its shaft 22 using the computational model, the rotating structure 20 and its shaft 22 may be balanced for the operating conditions they will experience during actual operation. By contrast, a typical mechanical balancing device rotates a rotating structure at relatively low speeds - compared to operating speeds of an aircraft engine, for example. However, a dynamic response of a rotating structure at low speeds may be different than a dynamic response of the rotating structure at higher speeds. Furthermore, rotating structure supports (e.g., bearings, etc.) may be located at different locations in the mechanical balancing device than in the actual aircraft drive unit. While a rotating structure may alternatively be mechanically balanced in a test rig (e.g., a test engine) to more accurately simulate operating conditions, test rigs may be expensive and time consuming to operate. Furthermore, even when using a test rig, the rotating structure may be supported at alternative locations and/or not be coupled to all its components; e.g., bladed rotors, etc. A test rig may also not be able to account for certain rotor dynamic instabilities and/or unrepresented boundary conditions.

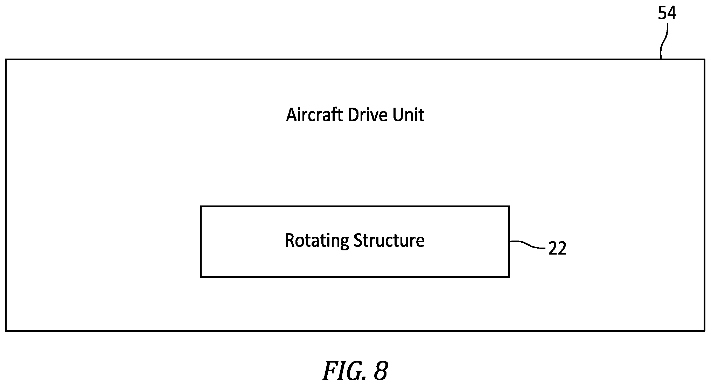

In step 1010, the rotating structure 20 is assembled with the apparatus. The rotating structure 20 of FIG. 8, for example, may be assembled into the aircraft drive unit (e.g., 54), or coupled to the aircraft drive unit. Where the rotating structure 20 is configured as the shaft 22, various additional components may be mounted to and/or otherwise coupled to the rotating structure 20 before and/or after being assembled with the aircraft drive unit 54.

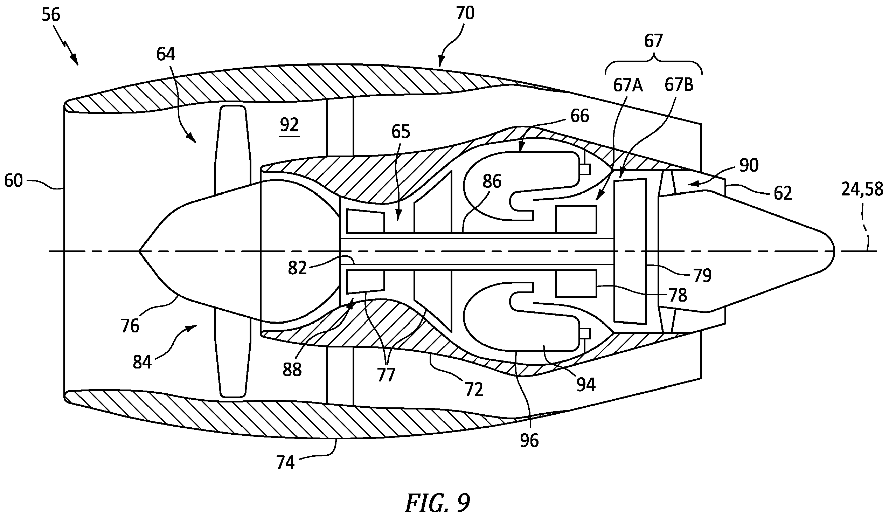

FIG. 9 illustrates an exemplary embodiment of the apparatus (e.g., the aircraft drive unit) configured as a gas turbine engine 56, which gas turbine engine 56 may include the balanced rotating structure 20 (e.g., see FIGS. 2 and 3). The balanced rotating structure 20, of course, may alternatively be configured for and included in various types of engines other than the exemplary gas turbine engine 56 of FIG. 9 as described above. Referring again to FIG. 9, the gas turbine engine 56 extends axially along an axial centerline 58 (e.g., the rotational axis 24) between an upstream airflow inlet 60 and a downstream airflow exhaust 62. The gas turbine engine 56 includes a fan section 64, a compressor section 65, a combustor section 66 and a turbine section 67. The turbine section 67 includes a high pressure turbine (HPT) section 67A and a low pressure turbine (LPT) section 67B; e.g., a power turbine section.

The engine sections 64-67B are arranged sequentially along the axial centerline 58 within an engine housing 70. This engine housing 70 includes an inner case 72 (e.g., a core case) and an outer case 74 (e.g., a fan case). The inner case 72 may house one or more of the engine sections 65-67B; e.g., a core of the gas turbine engine 56. The outer case 74 may house at least the fan section 64.

Each of the engine sections 64, 65, 67A and 67B includes a respective bladed rotor 76-79. Each of these bladed rotors 76-79 includes a plurality of rotor blades arranged circumferentially around and connected to one or more respective rotor disks. The rotor blades, for example, may be formed integral with or mechanically fastened, welded, brazed, adhered and/or otherwise attached to the respective rotor disk(s).

The fan rotor 76 is connected to and driven by the LPT rotor 79 through a low speed shaft 82. At least (or only) the engine members 76, 79 and 82 may form a low speed rotating structure 84. The compressor rotor 77 is connected to and driven by the HPT rotor 78 through a high speed shaft 86. At least (or only) the engine members 77, 78 and 86 may form a high speed rotating structure 88. The rotating structures 84, 88 and their shafts 82, 86 are rotatably supported by a plurality of bearings (not shown). Each of these bearings is connected to the engine housing 70 by at least one stationary structure such as, for example, an annular support strut. The rotating structure 20 may be configured as, or may be included in, any one of the rotating structures 84, 88 or any one of the shafts 82, 86.

During operation, air enters the gas turbine engine 56 through the airflow inlet 60. This air is directed through the fan section 64 and into a core flowpath 90 and a bypass flowpath 92. The core flowpath 90 extends sequentially through the engine sections 65-67B; e.g., the engine core. The air within the core flowpath 90 may be referred to as "core air". The bypass flowpath 92 extends through a bypass duct, which bypasses the engine core. The air within the bypass flowpath 92 may be referred to as "bypass air".

The core air is compressed by the compressor rotor 77 and directed into a combustion chamber 94 of a combustor 96 in the combustor section 66. Fuel is injected into the combustion chamber 94 and mixed with the compressed core air to provide a fuel-air mixture. This fuel-air mixture is ignited and combustion products thereof flow through and sequentially cause the HPT rotor 78 and the LPT rotor 79 to rotate. The rotation of the HPT rotor 78 drives rotation of the compressor rotor 77 and, thus, compression of the air received from a core airflow inlet. The rotation of the LPT rotor 79 drives rotation of the fan rotor 76, which propels bypass air through and out of the bypass flowpath 92. The propulsion of the bypass air may account for a majority of thrust generated by the gas turbine engine 56.

The gas turbine engine 56 is described above as a turbofan gas turbine engine. The present disclosure, however, is not limited to such an exemplary gas turbine engine. The gas turbine engine 56, for example, may alternatively be configured as a turboprop gas turbine engine, a turboshaft gas turbine engine, a turbojet gas turbine engine, a pusher fan gas turbine engine, a propfan gas turbine engine, an auxiliary power unit (APU) gas turbine engine or any other type of gas turbine engine or aircraft engine.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A method for manufacturing, comprising:
providing a rotating structure (20) rotatable about an axis (24), the rotating structure (20) comprising a shaft (22);
measuring a plurality of physical parameters of the shaft (22);
computationally modeling the rotating structure (20) using the plurality of physical parameters to determine a correction to balance rotation of the rotating structure (20) about the axis (24); and
physically altering the rotating structure (20) according to the correction.

2. The method of claim 1, wherein one of the plurality of physical parameters is a first runout measurement of the shaft (22) at a first axial location (40A ... 40E) along the shaft (22).

3. The method of claim 2, wherein another one of the plurality of physical parameters is a second runout measurement of the shaft (22) at a second axial location (40A ... 40E) along the shaft (22).

4. The method of any preceding claim, wherein one of the plurality of physical parameters is a first wall thickness (38) measurement of the shaft (22) at a or the first axial location (40A ... 40E) along the shaft (22).

5. The method of claim 4, wherein:
the first wall thickness (38) measurement is a minimum wall thickness (38A) measurement of the shaft (22) at the first axial location (40A ... 40E) along the shaft (22); and
another one of the plurality of physical parameters is a maximum wall thickness (38B) measurement of the shaft (22) at the first axial location (40A ... 40E) along the shaft (22).

6. The method of claim 4 or 5, wherein another one of the plurality of physical parameters is a second wall thickness (38) measurement of the shaft (22) at a second axial location (40A ... 40E) along the shaft (22).

7. The method of any preceding claim, wherein the computationally modeling of the rotating structure (20) comprises modeling a dynamic rotational response of the rotating structure (20) using the plurality of physical parameters to determine the correction.

8. The method of claim 7, wherein:
the rotating structure (20) is configured for an aircraft drive unit (54); and
the dynamic rotational response of the rotating structure (20) is modeled at an operating speed of the rotating structure (20) during one or more modes of operation of the aircraft drive unit (54).

9. The method of any preceding claim, wherein the physically altering of the rotating structure (20) comprises removing material from the rotating structure (20).

10. The method of any preceding claim, wherein the physically altering of the rotating structure (20) comprises adding material to the rotating structure (20).

11. The method of any preceding claim, wherein the physically altering of the rotating structure (20) comprises:
providing a balancing mass (48); and
inserting the balancing mass (48) into a bore of the shaft (22) and attaching the balancing mass (48) to the shaft (22).

12. The method of any preceding claim, wherein:
the rotating structure (20) is configured for a motor or an engine of an aircraft; and/or
wherein:
the rotating structure (20) consists of the shaft (22); or
the rotating structure (20) further comprises a bladed rotor (76) and/or a component (34) mounted to the shaft (22).

13. The method of any preceding claim, further comprising assembling a balanced rotating structure (20) into an aircraft drive unit (54), wherein the physically altering of the rotating structure (20) provides the balanced rotating structure (20).

14. A method for manufacturing, comprising
providing a rotating structure (20) rotatable about an axis (24), the rotating structure (20) comprising a shaft (22);
measuring a minimum wall thickness (38A) measurement of the shaft (22) at one or more locations (40A ... 40E) axially along the shaft (22) to provide minimum wall thickness data;
measuring a maximum wall thickness (38B) measurement of the shaft (22) at one or more locations (40A ... 40E) axially along the shaft (22) to provide maximum wall thickness data;
measuring a runout measurement of the shaft (22) at one or more locations (40A ... 40E) axially along the shaft (22) to provide runout data; and
processing the minimum wall thickness data, the maximum wall thickness data and the runout data to determine a correction to balance rotation of the rotating structure (20) about the axis (24); and optionally
modifying the rotating structure (20) according to the correction to provide a balanced rotating structure (20).

15. A method for manufacturing, comprising:
providing a rotating structure (20) rotatable about an axis (24), the rotating structure (20) comprising a shaft (22) and a component (34) mounted to the shaft (22);
measuring a plurality of physical parameters of the rotating structure (20); and
modeling the rotating structure (20) using the plurality of physical parameters to determine a correction to balance rotation of the rotating structure (20) about the axis (24); and optionally
physically altering the rotating structure (20) according to the correction to provide a balanced rotating structure (20).
